# EUROPEAN PATENT APPLICATION

(11) **EP 2 639 465 A1**
(43) Date of publication of application: **18.09.2013**
(21) Application number: 12159900.5
(22) Date of filing: 16.03.2012
(51) Int. Cl.: F16C 19/02, F16C 19/54, F16C 25/06, F16C 35/067, F16C 35/12

(54) **Ball bearing assembly method for low noise applications, and ball bearing assembly specifically adapted for implementing such method**

(71) Applicant: Peer Bearing S.r.l., 40133 Bologna (IT)
(72) Inventor: Falco, Gianluca, Willowbrook , IL 60527 (US); Concu, Cristian, 40010 Sala Bolognese BO (IT); Gutowski, Jordan Eric, Vernon Hills, IL Illinois 60061 (US); Xiaohui, Meng, Xinchang County, Zhejiang Province (CN); Huaqing, Li, Wuchuan City Guangdong (CN)
(74) Representative: Provvisionato, Paolo

(57) **Abstract**

A ball bearing assembly (10) comprises a couple of equal ball bearings (10a, 10b) each having an outer ring (16a, 16b) and an inner ring (18a, 18b) with balls (20a, 20b) thereinbetween. The outer rings (16a, 16b) are adapted to fit with interference, in use, with a cylindrical wall (14) of an external body (12) to be supported. The ball bearings (10a, 10b) are disposed adjacent to each other so that the outer rings (16a, 16b) are separated by a gap while the internal flanks (27a, 27b) of the inner rings (18a, 18b) can push one against the other, being in contact with each other either directly or trough an intermediate spacer.

## Description

### Background

The present invention relates to a ball bearing assembly method adapted for low noise applications. The invention also relates to a ball bearing assembly, wherein a ball bearing is supporting a rotating body subjected to a radial load, which is specifically adapted for implementing such method.

Ball bearings are well known, and they are routinely used to support a rotating body on a supporting shaft with the purpose of providing low friction in the relative rotation between the rotating body and the shaft, on one side, and bearing a radial load to which the rotating body can be subjected in use. Common examples, although non limiting ones, of rotating bodies are wheels, freewheels, pulleys or gearwheels. The invention can be adopted also in those cases where the rotating body is actually the inner shaft which rotates with respect to an external supporting body.

There are many cases where the rotating body is subjected to a heavy radial load, whose direction is constant. This is for example the case of wheels of heavy loaded vehicles, such as trains or trucks, or elevator pulleys or the like.

In order to bear the load without increasing the diameter of the whole assembly, a rotating body subjected to a heavy radial load is typically supported by a ball bearing of the double-row type, or by a couple of adjacent single-row ball bearing. A problem of the know type of ball bearings is that they show a certain noise due to the play between the balls and the raceways provided in the rings. This internal play, commonly known as radial internal clearance, is an intrinsic characteristic of the bearing and originates the vibrations that cause the noise. This noise is particularly evident in those applications where the rotating body reaches high speeds.

Various solutions have been proposed to reduce the play within the ball bearings of the known art, especially by applying thereto a preload in order to prevent that a play develops between the raceways and the balls following the application of a load, e.g. a radial load, to the ball bearings during its operation. However, none of the proposed solutions is fully satisfactory, either because it is complicated and therefore costly, or because it does not comply with more and more stringent and demanding requirements from the users, such as high reliability, long operation life, low cost and very low level of noise.

For example, one could arrive at a sufficient radial preload by selecting ball bearings having a very small initial radial play and mounting them in a housing with very high interference. The deformations induced by the housing on the external rings of the ball bearings would eliminate the play between the raceways and the balls, and therefore would reduce or eliminate the noise of the ball bearings. However, this solution is not satisfactory because the life cycle of the ball bearings would be greatly reduced.

### Summary

It is a purpose of the present invention that of overcoming the problems of the known art, and particularly that of providing a method to assemble a ball bearing assembly which is simple and economic to perform, so as to obtain a ball bearing assembly which shows a high reliability, low noise and very low vibrations, especially when it is used for supporting a rotating body which is subjected to a relatively high radial load and can reach a relatively high rotational speed. It is another purpose of the present invention that of providing a method to assemble a ball bearing assembly which shows no significant internal play between the balls and the raceways, even when it is subjected to a high radial load, especially a high rotating load on the outer ring. It is also a purpose of the invention that of providing a preloaded ball bearing assembly which has good reliability and a relatively long life cycle.

It is another purpose of the present invention that of providing a ball bearing assembly which is specifically adapted to implement such a method, and which is simple and economic to manufacture, as well as reliable and safe in operation.

In order to reach the above purposes, it is here proposed a ball bearing assembly method and a ball bearing assembly whose features are set forth in the appended claims.

A ball bearing assembly specifically adapted to implement the method comprises a couple of equal ball bearings, each having a outer ring and an inner ring with balls thereinbetween, the outer ring being adapted to fit with interference, in use, with a cylindrical wall of an external body to be supported, the ball bearings being disposed adjacent to each other so that the outer rings are separated by a gap while the internal flanks of the inner rings can push one against the other, being in contact with each other either directly or indirectly.

In one embodiment of the ball bearing assembly, the internal flanks of the inner rings are in contact with each other through an intermediate spacer ring. Alternatively, the width of the outer ring is smaller than the width of the inner ring so that when the ball bearings are disposed adjacent to each other the internal flanks of the respective inner rings are directly in contact with each other, while the outer rings are separated by a gap.

By exerting forces on the outer rings, directed toward each other, a preload of the ball bearings can be obtained in a quick, effective and simple way. The interference fit of both outer rings with said bore ensure that the preload is maintained even after the forces applied on the outer ring during assembling thereof are removed. The preload obtained is not a radial preload, and thus the effective long life cycle of the ball bearings is preserved.

Another advantage of the present invention is that it provides a solution for load bearing by means of ball bearings which are already preloaded and ready to use without further intervention on the part of the user. Contrary to this, conventional ball bearings usually have to be preloaded by the final user by means of other components, e.g. spring washers and the like. The present invention does not depend on the use or adoption of any additional component for the ball bearing assembly to manifest the preload effect.

### Brief summary of the drawings

Further features and advantages of the invention will become clear to an expert in the field from the following detailed description of a preferred embodiment, which is disclosed as a mere non-limiting example for the purpose of illustrating the principles underlying the present invention, with reference to the appended drawing in which:
- Fig. 1 is a cross section of a first embodiment of a ball bearing assembly according to the present invention;
- Fig. 2 is an enlarged view of a detail of the ball bearing assembly of Fig. 1;
- Fig. 3 is a cross section of a second embodiment of a ball bearing assembly according to the present invention;
- Figs. 4 and 5 are partial cross sections of the ball assembly of Fig. 1, wherein the plays between the balls and the raceways, before and after the preloading, respectively, are shown in an exaggerated manner for illustrative purpose; and
- Fig. 6 is a diagram schematically showing the relationship between the force and the axial position of the ball bearings with respect to the supported body, during the assembly method of the present invention.

### Detailed description

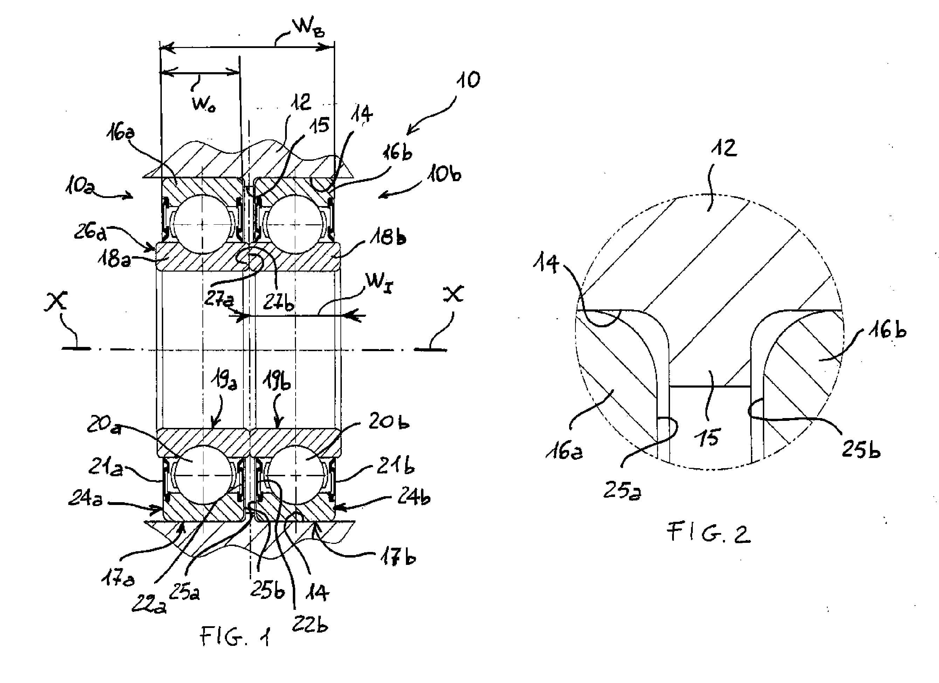

With reference now to Fig. 1, it is shown a cross section of a ball bearing assembly generally indicated by reference numeral 10, coupled to an external body 12, which can be in use a rotating body to be supported, having an inner cylindrical wall 14, preferably but non limitatively provided with a central annular ridge 15 whose purpose will become clear in the following.

The ball bearing assembly 10 comprises a couple of adjacent single-row ball bearings 10a, 10b. Each ball bearing 10a, 10b comprises an outer ring 16a, 16b, an inner ring 18a, 18b, and a series of spherical balls 20a, 20b arranged between them, respectively, and adapted to roll on raceways, that is concave grooves on the rings.

The sides of ball bearings 10a, 10b are closed by respective pairs of seals 21a, 22a; 21b, 22b. These seals have the function of keeping the lubricating grease inside the each of the ball bearings 10a, 10b of the ball bearing assembly 10 and avoid that contaminants from the outside enter the ball bearing assembly 10. The provision of a couple of ball bearings 10a, 10b with respective side seals 21a, 22a; 21b, 22b in the present invention is advantageous over the known solution of providing a single ball bearing of the double-row type, because the grease can be kept closer to the raceways where the lubrication is needed. On the contrary, in the known ball bearing of the double-row type, which has only two external side seals, the grease can unevenly distribute between the two rows, with the consequence of uneven lubrication and unsatisfactory performances and reliability of the ball bearing assembly.

Each outer ring 16a, 16b has an outer cylindrical wall 17a, 17b, respectively, which rests against the inner cylindrical wall 14 of the external body 12 with high interference, for reasons which will become clearer in the following. The outer ring 16a, 16b have respective external flanks 24a, 24b, and respective internal flanks 25a, 25b, the latter ones facing each other and being separated by, although not touching the central annular ridge 15 (see Fig. 2).

Each inner ring 18a, 18b has an inner cylindrical wall 19a, 19b, respectively, which is adapted to engage onto a shaft (not shown in the figures), and respective external flanks 26a, 26b and internal flanks 27a, 27b, the latter ones abutting onto each other. Each inner ring 18a, 18b has a width W_{I} in an axial direction X-X which is greater than the width Wₒ of the respective outer ring 16a, 16b, so that when the internal flanks 27a, 27b of the two inner rings 18a, 18b are in contact with each other as shown in Fig. 1, their external flanks 26a, 26b projects axially a little bit beyond the overall outer width W_{B} of the ball bearing assembly 10 defined by the distance between the external flanks 24a and 24b of the outer rings 16a and 16b.

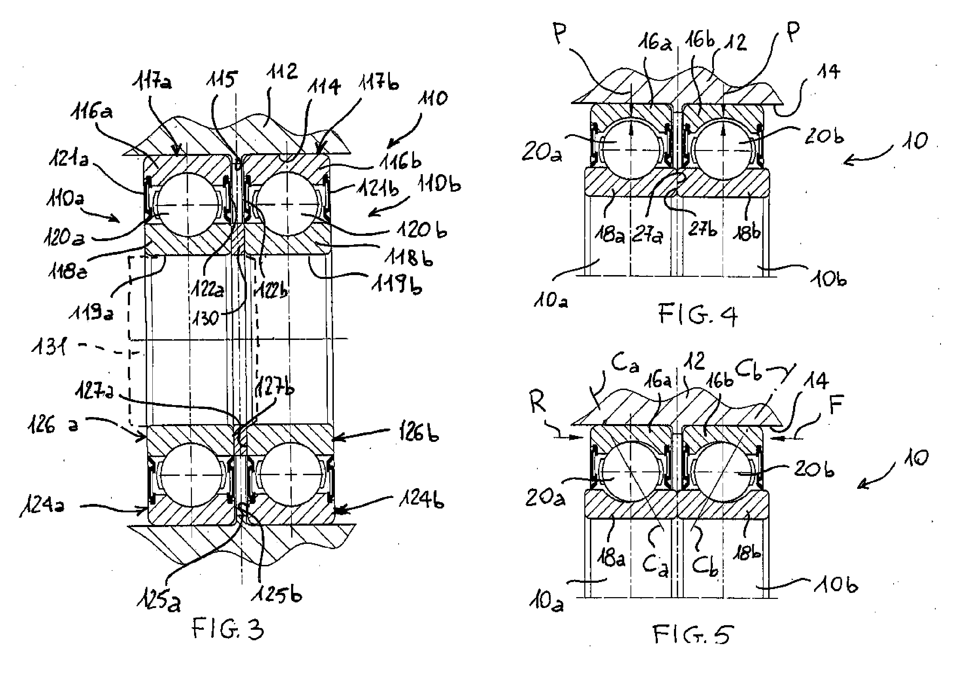

Another embodiment of the present invention is shown in Fig. 3, which is a cross section of a ball bearing assembly generally indicated by reference numeral 110, coupled to an external body 112, which can be in use a rotating body to be supported, having an inner cylindrical wall 114, preferably but non limitatively provided with a central annular ridge 115 analogue to the annular ridge 15 of the embodiment previously described.

The ball bearing assembly 110 comprises a couple of adjacent single-row ball bearings 110a, 110b. Each ball bearing 110a, 110b comprises an outer ring 116a, 116b, an inner ring 118a, 118b, and a series of spherical balls 120a, 120b arranged between them, respectively, and adapted to roll raceways, that is on concave grooves on the rings.

The sides of ball bearings 10a, 10b are closed by respective pairs of seals 121a, 122a; 121b, 122b, analogous to the seals 21a, 22a; 21b, 22b of the previous embodiment shown in Fig. 1, and providing similar functionalities and advantages.

Each outer ring 116a, 116b has an outer cylindrical wall 117a, 117b, respectively, which rests against the inner cylindrical wall 114 of the external body 112 with high interference, for reasons which will become clearer in the following. The outer rings 116a, 116b have respective external flanks 124a, 124b, and respective internal flanks 125a, 125b, the latter ones facing each other and being separated by, although not touching the central annular ridge 115.

Each inner ring 118a, 118b has an inner cylindrical wall 119a, 119b, respectively, which is adapted to engage onto a shaft (not shown in the figures), and respective external flanks 126a, 126b and internal flanks 127a, 127b, the latter ones being in contact with a central annular spacer ring 130. The width of each inner ring 118a, 118b is preferably equal to the width of the respective outer ring 116a, 116b, while the width of the central annular spacer ring 130 is greater than the width of the central annular ridge 115.

The insertion of the ball bearing assembly 10 into the external body 12 is effected in the following way. As mentioned before, the coupling between the outer ring 16a, 16b of the ball bearing assembly 10 and the internal cylindrical wall 14 of the external body 12 is an interference fit, preferably a high interference one, for example but not exclusively with a tolerance P6. A first ball bearing 10a of the ball bearing assembly 10 is firstly fitted in the internal cylindrical wall 14 of the external body 12 by exerting an axial pressure on the external flank 24a of its outer ring 16a, which overcomes the friction between the outer cylindrical wall 17a of the outer ring 16a and the internal cylindrical wall 14 of the external body 12. The axial insertion of the first ball bearing 10a from one side of the external body (e.g. from the left side in the example shown in Fig. 1) continues until the external flank 24a of its outer ring 16a has reached a predetermined reference position, preferably close to although not touching, the central annular ridge 15.

Thereafter, the second ball bearing 10b of the ball bearing assembly 10 is inserted into the internal cylindrical wall 14 of the external body 12, from the side opposite the one (e.g. from the right side in the example shown in Fig. 1) where the first ball bearing 10a has been inserted, by exerting an axial pressure on the external flank 24b of its outer ring 16b, which overcomes the friction between the outer cylindrical wall 17b of the outer ring 16b and the internal cylindrical wall 14 of the external body 12. The axial insertion of the second ball bearing 10b continues similarly to the insertion of the first ball bearing 10a, until the internal flank 27b of its inner ring 18b enters into contact with the corresponding internal flank 27a of the first ball bearing 10a.

At this point, the axial push on the outer ring 16b of the second ball bearing 10b is continued, so as to reach a desired level of axial preload of the ball bearing assembly 10. More specifically, a continued axial push on the external flank 24b of the outer ring 16b of the second ball bearing 10b determines a force which transmits through the balls 20b to the inner ring 18b, which in turn exerts an axial force on the corresponding inner ring 18a of the first ball bearing 10a which, in turn, exerts a force, through its balls 20a, to its outer ring 16a. The outer ring 16a is kept into its position by a stop provided by a tool or device which prevents an axial movement of the outer ring 16a, with the consequence that the ball bearings 10a, 10b are preloaded axially. When the desired preload has been reached, the pressure on the external flank 24b of the outer ring 16b is stopped.

The effect which is reached through this method is shown in Figs. 4 and 5, where the play between the balls 10a, 10b and the raceways provided in the rings of the ball bearings 10a, 10b is exaggerated for illustrative purposes.

Fig. 4 shows the ball bearings 10a, 10b at the moment when the second ball bearing 10b has been inserted into the internal cylindrical wall 14 of the external body 12 and the internal flank 27b of its inner ring 18b just entered into contact with the corresponding internal flank 27a of the first ball bearing 10a. In this condition, each ball bearing 10a, 10b shows a play P, or radial internal clearance, between its balls 20a, 20b and the raceways provided on the rings.

Fig. 5 shows the effect of the axial push F on the outer ring 16b of the second ball bearing 10b, and the corresponding reaction R on the outer ring 16a of the first ball bearing 10a due to the friction thereof with the internal cylindrical wall 14 of the external body 12, which leads to the desired level of axial preload of the ball bearing assembly 10. As it is exemplified in Fig. 5, the axial force F transmits from the outer ring 16b to the inner ring 18b through the balls 20b along an angled contact direction C_{b}-C_{b}, so that the play between the balls 20b and the raceways of the outer ring 16b and the inner ring 18b disappears and a preload is generated. In Fig. 5 therefore it is shown that the ball bearings 10a, 10b are in a configuration with zero clearance, and the balls and raceways are in angular contact with each other.

The inner ring 18b in turn exerts an axial force on the inner ring 18a of the first ball bearing 10a so as to bring the balls 20a into contact with the inner ring 18a and the outer ring 16a along an angled contact direction Cₐ Cₐ, so that the play between the balls 20a and the raceway of the outer ring 16a and the inner ring 18a disappears and a preload is generated.

The axial force exerted on the ball bearing assembly 10 by means of the axial pressure on the external flank 24b of the outer ring 16b of the second ball bearing 10b, counteracted by the stop provided by the tool or device which blocks an axial movement of the outer ring 16a of the first ball bearing 10a, should not exceed a predetermined fraction of the static carrying capacity, also called static load rating. In particular, it is preferred that the force applied rests well below half of the static load rating, and preferably reaches about a quarter of said limit, in order to have a good compromise between obtaining a desired preload of the ball bearing assembly and avoiding damages thereto caused by brinelling.

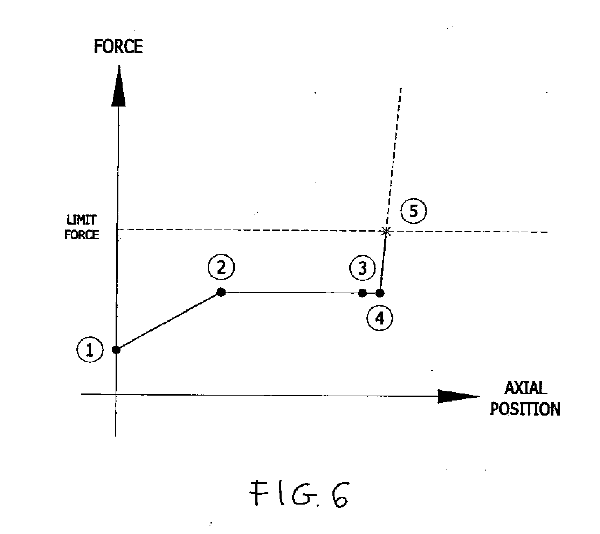

Fig. 6 schematically shows how the force which is applied to the ball bearing 10b during its insertion by means of e.g. a press or a similar tool. The monitoring of the axial position and the force which is applied is a way to control the assembly process of the ball bearing assembly 10 in order to reach the desired preload. In the diagram of Fig. 6, point 1 represents the moment when the ball bearing 10b gets into the housing, or external body 12. The force applied to the outer ring 16b of the ball bearing 10b increases increases steadily until point 2 of the diagram is reached, corresponding to the position where the outer ring 16b is completely inserted into the housing 12 and is sliding towards its final location. From this moment on, the force applied to the outer ring 16b of the ball bearing 10b is substantially constant until point 3 of the diagram is reached, when the inner ring 18b of ball bearing 10b gets into contact with the corresponding inner ring 18a of the other ball bearing 10a, previously mounted in the housing 12. From point 3 to point 4 of the diagram, a further small axial movement does not cause any significative increment of the force which the press has to apply to the outer ring 18b of the ball bearing 10b, because of the radial clearance or play P which exists in the ball bearings 10a, 10b (see Fig. 4) and which is progressively reduced. When this clearance of play P is eliminated (see Fig. 5), the raceways and balls of both ball bearings 10a, 10b are completely in angular contact with each other (Cₐ-Cₐ, C_{b}-C_{b} of Fig. 5) and thus the force applied to the press quickly raises while the ball bearing 10b does not substantially move any more in the axial direction. When the monitored force on the press reaches a predetermined level (point 5 on the diagram of Fig. 6) corresponding to the predetermined fraction of the static carrying capacity which has been mentioned before, the insertion process is terminated by removing the press or tool used to insert the ball bearing 10b in the housing 12.

It is preferred that the insertion of the second ball bearing 10b in the external body 12 is effected with the help of a very good lubrication to facilitate the final pressure against the first ball bearing 10a which is already in place within the external body 12, with an interference fit against the internal cylindrical wall 14 thereof.

The central annular ridge 15 is a preferred safety measure, to avoid erroneous operations during the assembling of the ball bearing assembly 10, in particular to avoid that the insertion of the first ball bearing 10a goes too far and the inner flank 27a of the inner ring 18a goes too much beyond the optimal predetermined position within the external body 12. With the provision of the central annular ridge 15, even if the external flank 24a of the outer ring 16a is pushed a bit too much beyond the prederemined position within the external body 12, the insertion of the first ball bearing 10a nonetheless stops when the internal flank 25a of the outer ring 16a touches the central annular ridge 15. The central annular ridge is also useful to prevent possible axial movements of the two ball bearings 10a, 10b, should the interference fit between them and the internal cylindrical wall 14 of the external body 12, for whatever unpredictable reasons, be lost in use.

At any rate, the central annular ridge 15 could be absent, without af fecting negatively the performances of the ball bearing assembly 10, especially if other or equivalent safety means are provided.

The above method also applies to the insertion of the ball bearing assembly 110 into the external body 112, as this second embodiment of ball bearing differs from the first one mainly because the contact between the two inner rings 118a, 118b is obtained with the interposition of the central annular spacer ring 130, rather than directly abutting the internal flanks 127a, 127b with each other. As previously described with reference to the first embodiment, the first ball bearing 110a of the ball bearing assembly 110 is firstly fitted in the internal cylindrical wall 114 of the external body 112 by exerting an axial pressure on the external flank 124a of its outer ring 116a, which overcomes the friction between the outer cylindrical wall 117a of the outer ring 116a and the internal cylindrical wall 114 of the external body 112. The axial insertion of the first ball bearing 110a from one side of the external body (e.g. from the left side in the example shown in Fig. 3) continues until the external flank 124a of its outer ring 116a has reached a predetermined reference position, preferably close to although not touching, the central annular ridge 115.

Thereafter, the central annular spacer ring 130 is introduced into the internal cylindrical wall 114 of the external body 112 (from e.g. the right side in the example shown in Fig. 3) and brought into contact with the internal flank 127a of the inner rings 118a and kept into a centered position by means of e.g. a central reference shaft 131 or other similar tool (shown in broken lines in Fig. 3).

Thereafter, the method proceeds in the same way as previously described. More specifically, the second ball bearing 110b of the ball bearing assembly 110 is inserted into the internal cylindrical wall 114 of the external body 112 from e.g. the right side in the example shown in Fig. 3, by exerting an axial pressure on the external flank 124b of its outer ring 116b, which overcomes the friction between the outer cylindrical wall 117b of the outer ring 116b and the internal cylindrical wall 114 of the external body 112. The axial insertion of the second ball bearing 110b continues similarly to the insertion of the first ball bearing 110a, until the internal flank 127b of its inner ring 118b enters into contact with the central annular spacer ring 130. At this point, the axial push on the outer ring 116b of the second ball bearing 110b is continued, so as to reach a desired level of axial preload of the ball bearing assembly 110, in the same way as previously described with reference to the first embodiment of ball bearing assembly 10, in order to reach the same effects in terms of preloading of the ball bearing assembly 110. Similar considerations regarding the preferred limit force to be applied (well below half of the static load rating of the ball bearings, and preferably about 25% of said limit), the preferred use of a very good lubrication, the preferred function of central annular ridge 115, etc. are also applicable to the assembly method of this second embodiment.

Clearly, provided that the principles of the invention are retained, the features of its embodiment and the details of its application can be varied widely from what has been described and illustrated, without departing from the scope of the invention.

## Claims

1. A ball bearing assembly (10, 110) comprising a couple of equal ball bearings (10a, 10b; 110a, 110b) each having an outer ring (16a, 16b; 116a, 116b) and an inner ring (18a, 18b; 118a, 118b) with balls (20a, 20b; 120a, 120b) thereinbetween, the outer rings (16a, 16b; 116a, 116b) being adapted to fit with interference, in use, with a cylindrical wall (14, 114) of an external body (12, 112) to be supported, the ball bearings (10a, 10b; 110a, 110b) being disposed adjacent to each other so that the outer rings (16a, 16b; 116a, 116b) are separated by a gap while the internal flanks (27a, 27b; 127a, 127b) of the inner rings (18a, 18b; 118a, 118b) can push one against the other, being in contact with each other either directly or trough an intermediate spacer (130).

2. A ball bearing assembly according to claim 1, wherein the width (Wₒ) of the outer rings (16a, 16b) is smaller than the width (W_{I}) of the inner rings (18a, 18b) so that when the couple of ball bearings (10a, 10b) are disposed adjacent to each other and internal flanks (27a, 27b) of the inner rings (18a, 18b) are directly in contact with each other, the outer rings (16a, 16b) are separated from each other by said gap.

3. A ball bearing assembly according to claim 1 or 2, wherein the outer rings (16a, 16b; 116a, 116b) and inner rings (18a, 18b; 118a, 118b) are provided with raceways for the balls (20a, 20b; 120a, 120b) to roll on them, the cross section of said raceways being an arc of a circle.

4. A ball bearing assembly according to any one of claims 1 to 3, wherein the sides of each ball bearing (10a, 10b: 110a, 110b) are closed by respective pairs of seals (21a, 22a - 21b, 22b; 121a, 122a - 121b, 122b).

5. A ball bearing assembly according to any one of preceding claims, further comprising a external body (12; 112) having an internal cylindrical wall (14; 114), the couple of equal ball bearings (10a, 10b; 110a, 110b) being disposed adjacent to each other, the outer rings (16a, 16b; 116a, 116b) being fit with interference with the internal cylindrical wall (14; 114) of the rolling body (12; 112), the internal flanks (27a, 27b; 127a, 127b) of the inner rings (18a, 18b; 118a, 118b) being in contact with each other, either directly or trough the intermediate spacer (130).

6. A ball bearing assembly according to claim 5, wherein the outer rings (16a, 16b; 116a, 116b) are fit with interference with the internal cylindrical wall (14; 114) in a condition of mutual distance to each other which is sufficient to develop a preload on the ball bearings (10a, 10b; 110a, 110b).

7. A ball bearing assembly according to claim 5 or 6 wherein an annular ridge (15; 115) is provided on the internal cylindrical wall (14; 114) of the external body (12; 112) which projects in the gap between the inner rings (16a, 16b; 116a, 116b).

8. A method for assembling the ball bearing assembly of claim 1 comprising the steps of setting in place a first one (10a; 110a) of the couple of ball bearings (10a, 10b; 110a, 110b); bring the second one (10b; 110b) of the couple of ball bearings (10a, 10b; 110a, 110b) close to the first one (10a; 110a) in an axial direction until a internal flank (27b; 127b) of the inner ring (18b; 118b) of the second ball bearing (10b; 110b) gets into contact, either directly or through an intermediate spacer (130), with a corresponding internal flank (27a; 127a) of the inner ring (18a; 118a) of the first ball bearing (10a; 110a); exert predetermined forces on the outer rings (16a, 16b; 116a, 116b) directed toward each other in the axial direction (X-X), so as to preload the ball bearings (10a, 10b; 110a, 110b).

9. A method according to claim 8, wherein one of said forces on a first outer ring (16a; 116a) is a force caused by a stop of the axial movement of the outer ring (16a; 116a) provided by a tool or device means acting on an external flank (24a; 124a) thereof.

10. A method according to claim 9, wherein said first outer ring (16a; 116a) is the outer ring of said first ball bearing (10a; 110a) which was firstly set into place.

11. A method according to claim 8 or 9, wherein the forces are a predetermined fraction of the static load rating for the ball bearings (10a, 10b; 110a, 110b).
